**Europäisches Patentamt**

**European Patent Office**

**Office européen des brevets**

(11) Veröffentlichungsnummer: **0 025 557**
**B1**

# EUROPÄISCHE PATENTSCHRIFT

(45) Veröffentlichungstag der Patentschrift:
08.01.86

(21) Anmeldenummer: 80105257.2

(22) Anmeldetag: 04.09.80

(51) Int. Cl.⁴: **B 60 P 1/64**

(54) Transportfahrzeug mit Vertikal-Hydraulik-Hubeinrichtungen für Wechselaufbau.

(30) Priorität: 07.09.79 DE 2936254

(43) Veröffentlichungstag der Anmeldung:
25.03.81 Patentblatt 81/12

(45) Bekanntmachung des Hinweises auf die Patenterteilung:
08.01.86 Patentblatt 86/2

(84) Benannte Vertragsstaaten:
AT BE CH DE FR GB IT LI LU NL SE

(56) Entgegenhaltungen:
DE - A - 1 580 351
FR - A - 1 183 846
FR - A - 2 154 896
FR - A - 2 285 262
GB - A - 958 031
US - A - 4 165 007

(73) Patentinhaber: **Emil Dautel GmbH u. Co. KG.,
Postfach 30 Dieselstrasse 30, D-7105 Leingarten (DE)**

(72) Erfinder: **Dautel, Helmut, Augelbaumstrasse 72,
D-7105 Leingarten (DE)**
Erfinder: **Kilgus, Karl Heinz, Ulrich-Hahnstrasse 16,
D-7124 Bönnigheim (DE)**
Erfinder: **Fritz, Mathias, Blumenstrasse 10,
D-7101 Oedheim (DE)**

(74) Vertreter: **Utermann, Gerd, Dipl.-Ing.,
Kilianstrasse 7 Kilianspassage Postfach 3525,
D-7100 Heilbronn (DE)**

**Beschreibung**

Die Erfindung betrifft ein Transportfahrzeug mit fahrzeugfesten Vertikal-Hydraulik-Hubeinrichtungen für Wechselaufbauten, die vordere und hintere Angriffsmittel zum Heben mit den Hubeinrichtungen und Abstützmittel für den vom Fahrzeug abgenommenen Zustand aufweisen, wobei die vorderen Hubeinrichtungen unmittelbar vor dem Wechselaufbau und oberhalb der Wechselaufbauunterkante angeordnet und die hinteren Vertikal-Hubeinrichtungen im Bereich der Hinterachse angeordnet sind.

Derartige Transportfahrzeuge sind in der Regel Lastkraftwagen mit Chassis, Motor und Führerhaus. Es können jedoch auch Sattelfahrzeuge oder Anhängefahrzeuge, vor allem mit Drehschemelvorderachse sein.

Transportfahrzeuge mit Wechselaufbauten werden einerseits zum Transport von Containern, also Grosstransportbehältern, benutzt. Dafür sind die verschiedensten Umladeeinrichtungen bekannt. Diese können an der Ladestelle fest als Kräne, Portalumsetzeinrichtungen od.dgl. ausgebildet sein. Dann brauchen die Fahrzeuge nicht unbedingt eigene Abhebevorrichtungen zu besitzen. Solche Fahrzeuge werden nur für den speziellen Containertransport benötigt. Ferner gibt es Hubeinrichtungen für Wechselaufbauten in Containerform, die oberhalb der Unterkante des Containers an der vorderen und hinteren Stirnseite angreifende Hebe- und Schwenkeinrichtungen aufweisen, die es gestatten, den Container auf dem Fahrgestell anzuheben und mit einer entsprechenden Hebelanordnung seitwärts abzusetzen. Diese Hubeinrichtungen gestatten es nicht, mit dem eigentlichen Fahrzeugantrieb unter einen stehenden Container zu fahren. Die Unterbringung der Hubeinrichtung bereitet dabei auch kaum Schwierigkeiten, weil es sich um Spezialfahrzeuge handelt. Es gibt jedoch zahlreiche andere Anwendungsfälle, bei denen die verschiedensten Wechselaufbauten, wie Kipper, Betonmischer und sonstige Spezialaufbauten und auch Containeraufbauten, Ladepritschen und Möbelkoffer oder dergleichen wahlweise zu wechseln sind. Solche Fahrzeuge benötigen wegen des vielfältigen Einsatzes eine Vielzahl von Zusatzeinrichtungen, die untergebracht werden müssen. Ausserdem hat das Auf- und Abladen der Wechselaufbauten durch Anheben des Wechselaufbaus, Abstützen desselben und Herausfahren unter dem Wechselaufbau auf den normalen Fahrzeugrädern zu erfolgen. Dazu dürfen die Hub- und Stützeinrichtungen nicht oberhalb der Wechselaufbauunterkante liegen, damit ein freies Heraus- und Hereinfahren möglich ist. Bei derartigen Transportfahrzeugen werden zum Anheben auch verschiedene Hubeinrichtungen, teils mechanischer, pneumatischer und hydraulischer Art verwendet. Viele Herstellungs-, Einbau- und Benutzungsvorteile hat die hydraulische Anhebung mit vertikal arbeitenden Hydraulikzylindern. Diese werden bisher als im vorderen und hinteren Bereich unter dem Wechselaufbau am Fahrgestell angeordnete Hydraulikdruckzylinder ausgebildet. Ihre Hublänge muss grösser sein als der maximale Federweg bis zur vollen Belastung. Sie haben deshalb beträchtliche Längen oder sind als aufwendige Teleskopzylinder auszubilden. Ausserdem ist sicherzustellen, dass alle Zylinder im Gleichlauf arbeiten, um ein Verkanten des Aufbaus zu verhindern. Dadurch unterscheiden sich derartige Transportfahrzeuge von Aufladesystemen, die über eine schräge Ebene aufladen und deshalb wesentlich einfachere Hubeinrichtungen verwenden können. Sie gestatten jedoch nicht, Aufbauten mit verschiebbaren Gütern zu wechseln. Im Bereich der Hinterachse können ausreichend grosse Hydraulikhubeinrichtungen in der Regel problemlos untergebracht werden. Im Bereich des Vorderendes des Wechselaufbaus bereitet die Unterbringung von Hubeinrichtungen jedoch aus verschiedenen Gründen Schwierigkeiten. Bei Drehschemelfahrzeugen oder Sattelfahrzeugen muss der entsprechende Schwenkraum freigehalten werden. Dadurch ist es dann nicht möglich, in den für die Lastabstützung günstigsten vorderen Bereich zu gelangen. Bei Lastkraftwagenchassis, insbesondere für Wechselaufbauten verschiedener Ausgestaltung, müssen im Bereich um die Vorderachse, das Fahrerhaus und das Getriebe oft eine grosse Zahl von für das Fahrzeug notwendigen oder für die verschiedenen Ausgestaltungen erforderlichen Einrichtungen, wie Treibstofftanks, Batteriehalterungen, Luftkessel, Hydraulikpumpen, Steuerungen, Hydraulik-Öltanks und dgl. untergebracht werden. Diese Einrichtungen sind entweder am Fahrzeug schon vorhanden oder können wegen ihrer Grösse nicht an beliebiger Stelle untergebracht werden. Ihre Lage an unterschiedlichen Fahrzeugtypen wechselt sehr stark, so dass kein Platz für die standardisierte Unterbringung der vorderen Hubzylinder unterhalb der Wechselaufbauunterkante gefunden werden kann. Bei einer Reihe heutiger Konstruktionen sind auch noch von Hand zu betätigende Verspann- und Verriegelungseinrichtungen zwischen Wechselaufbau und Fahrzeugchassis unterzubringen, die zudem noch für die Betätigung zugänglich sein müssen. Demgemäss ist die Fertigung vieler Wechseleinrichtungen noch stark handwerklich geprägt, denn die Lage der vorderen Hubzylinder und die Lage der Verriegelungseinrichtungen wird nach den jeweiligen Platzverhältnissen des individuellen Fahrzeuges im Einzelfall festgelegt. So können Wechselaufbauten nur schwer für unterschiedliche Fahrzeuge geeignet ausgestattet werden. Auch ist für das nachträgliche Versehen weiterer Wechselaufbauten mit den Anschlusselementen individuelle Anpassarbeit in der Werkstatt erforderlich. Der Nachteil vieler Konstruktionen besteht also darin, dass Hub- und Spannelemente nicht auf ein einheitliches Rastermass gesetzt werden können. Auch besonders diesbezüglich soll die Erfindung wesentliche Verbesserungen schaffen.

Aus FR-A-2 285 262 ist ein Transportfahrzeug mit den eingangs genannten Merkmalen bekannt. Dieses hat fahrzeugfeste Vertikal-Hydraulik- Hubeinrichtungen für Wechselaufbauten, die vordere und hintere Angriffsmittel für die Hubeinrichtungen und Abstützmittel für den vom Fahrzeug abgenommenen Zustand aufweisen. Die vorderen Hubeinrichtungen sind unmittelbar vor dem Wechselaufbau und teilweise oberhalb der Wechselaufbauunterkante angeordnet. Die vorderen Hubeinrichtungen sind mindestens teilweise oberhalb des Getriebes und sonstiger Fahrzeugteile angeordnet. Die hinteren Hubeinrichtungen sind im Bereich der Hinterachse angeordnet. Bei dieser Konstruktion wird das Anheben des Wechselaufbaus durch wechselweises Kippen vorgenommen. Das Fahrzeug ist ausserdem als Kipper ausgebildet und hat als vordere Hubeinrichtung einen lang ausfahrenden Teleskopzylinder. Eine geeignete Zusammenwirkung der verschiedenen Zylinder zur unmittelbaren Erzielung eines Gleichlaufs kann eine solche Konstruktion nicht bieten, so dass durch besondere Massnahmen beim Anheben und Absenken dafür gesorgt werden muss, dass der Wechselaufbau den Beladungsverhältnissen entsprechend bewegt wird. Das erfordert entweder besondere konstruktive Massnahmen oder grosse Achtsamkeit des Bedienungspersonals und birgt die Gefahr des Verrutschens der Ladung in sich, wodurch Unfälle zu befürchten sind. Eine Standardisierung für verschiedene Fahrgestelle und Wechselaufbauten ist nicht vorgesehen. Viel handwerkliche Arbeit ist auch hier bei der Herstellung erforderlich.

Bei der Konstruktion nach GB-A 958 031 ist zum Laden ein besonderes Stützgestell erforderlich. Im übrigen wird ebenfalls schräg gekippt und Einzelheiten über die Kipp- und Ladezylinder sind nicht ersichtlich mit Ausnahme dessen, dass sie unmittelbar zwischen Fahrzeugaufbau und Führerhaus vorgesehen sind.

Aus der alten Konstruktion nach FR-A 1 183 846 ist zwar ein als Senkrecht-Heben veranschaulichtes Heben mit vorn und hinten stehenden Zylindern vorgesehen. Die Konstruktion erfordert jedoch im vorderen Bereich viel Platz und führt dadurch zu Nutzraumverlust. Auch sind keine Massnahmen zur wirklichen Sicherung des Gleichlaufs vorgesehen.

Aus US-A 4 165 007 sind seitlich ausschwenkende Sicherheitshaken ersichtlich, die jedoch den Verbindungsbedürfnissen solcher Fahrzeuge zumindest allein nicht gerecht werden dürften.

Aus DE-A 1 580 351 sind Einweiserflächen bekannt, die jedoch nur für das senkrechte Absetzen geeignet erscheinen, nicht jedoch das genaue Einführen beim Zusammenfahren von Fahrzeug und Wechselaufbau ermöglichen und darüber hinaus nicht speziell dafür vorgesehen sind, an bestimmten Punkten so vorgesehen zu werden, dass sie für verschiedene Fahrzeugtypen geeignet sind.

Das Patent behandelt eine Gruppe von Erfindungen, die untereinander in der Weise verbunden sind, dass sie eine einzige allgemeine erfinderische Idee verwirklichen, die darin besteht, bei Transportfahrzeugen der eingangs genannten Art die Hubeinrichtungen und zugehörigen Elemente so auszugestalten, dass sie weitgehend unabhängig von der Fahrzeugkonstruktion und der Aufbaukonstruktion an Stellen untergebracht werden können, die so ausgewählt sind, dass es sich um in der Regel an verschiedenen Grundfahrzeugen verfügbare (standardisierte) Punkte oder Bereiche handelt, an denen diese Elemente Platz haben.

Dem einen Teil der Erfindungsgruppe liegt im wesentlichen die Aufgabe zugrunde, bei Transportfahrzeugen der eingangs genannten Art die Hubeinrichtungen und zugehörigen Elemente so auszugestalten, dass sie ein sicheres Anheben und Absetzen gestatten und zwar bei Anordnung an geeigneten Stellen und weitgehend unabhängig von der Fahrzeug- und/oder Aufbaukonstruktion. Erfindungsgemäss ist diesbezüglich vorgesehen, dass die vorderen Hubeinrichtungen Zugzylinder und die hinteren Hubeinrichtungen Druckzylinder gleichen Kolbendurchmessers und gleichen Kolbenstangendurchmessers sind, die in Gleichlaufschaltung derart in Reihe geschaltet sind, dass Kolbenstangenräume mit Kolbenstangenräumen und Kolbenräume mit Kolbenräumen verbunden und Zulauf und Ablauf entweder an Kolbenstangenräumen oder an Kolbenräumen angeschlossen sind.

Mit dieser Lösung werden in vorteilhafter Weise die Hubelemente an den räumlich problemlosen Stellen im Bereich der Hinterachse belassen und auch im vorderen problematischen Bereich an einem bei der Wechselbewegung nicht störenden Ort, nämlich oben, belassen. Solche Hubeinrichtungen können einerseits leicht standardisiert und bei gleicher Bauart und nur unterschiedlichen Anschlusselementen serienmässig vorgefertigt und auf LKW-Chassis, Sattelfahrzeuge oder Anhänger mit Drehschemeln der unterschiedlichsten Bauart problemlos aufgesetzt werden, ganz gleich welche sonstigen Zusatzeinrichtungen einzubauen sind. Durch die Wahl der besonderen Gleichlaufschaltung wird ohne weitere Steuerungsmassnahmen sichergestellt, dass alle Zylinder stets mit gleichen Wegen ausfahren oder einfahren, und somit der Wechselaufbau ganz gleich, wie seine Belastung verteilt ist, stets gleichmässig angehoben bzw. abgesetzt wird, so dass ein Verschieben der Ladung und Unfälle dadurch vermieden werden. Obwohl es in anderen Bereichen der hydraulischen Schalt-, Steuer- und Betriebstechnik seit langem bekannt sein dürfte, die Zylinder und Kolbenstangen und ihre Räume so zu bemessen und so zusammenzuschalten, dass bei erwünschtem Gleichlauf dieser hydraulisch erzwungen wird, ist es bisher nicht bekannt geworden und gelungen, für Wechselaufbauten auf Fahrzeugen, die Auswahl der Kolben-Zylinder-Aggregate und eine so einfache und sichere Schaltung vorzuschlagen, wie es nunmehr nach der Erfindung geschieht. Man kann nunmehr Normzylinder zusammenstellen und sie in der besonders geeigneten Anordnung und Schaltung nach der Erfindung verwenden. Man hat damit die bisherige Auffassung, bei Gleichlaufschaltungen keine Normzylinder verwenden zu können, überwunden. So ist nicht die Hintereinanderschaltung mehrerer Arbeitszylinder mit durchgehender Kolbenstange erforderlich, die auch ungeeignet wäre, weil durchgehende Kolbenstangen zu weit nach unten aus dem Fahrzeug herausstehen würden. Man muss nunmehr nicht mehr versuchen, Hydraulikzylinder einzusetzen, die in den Kolbenringflächen der einen und den Kolbenflächen der zugeordneten Zylinder aufeinander abgestimmt sind und die unter Berücksichtigung der auftretenden Belastung nur in den seltensten Fällen aus Normzylindern zusammengestellt werden konnten, sondern kann jetzt viel freier bei der Auswahl der Kolben-Zylinder-Aggregate vorgehen. Durch die Unterbringung der vorderen Hubeinrichtungen unmittelbar vor dem Wechselaufbau und oberhalb der Wechselaufbau-Unterkante liegen diese in einem in der Regel über die ganze Fahrzeugbreite reichenden Raum und es ist weiterhin möglich, nur sehr wenig von der Fahrzeuglänge in Anspruch zu nehmen. Der hier benötigte Raum wird nicht über Gebühr beansprucht, weil die Hubeinrichtungen sehr dünn gebaut werden können. Durch die Anordnung der vorderen Hubeinrichtungen in einem nach oben offenen bzw. praktisch nicht begrenzten Raum lassen sich hier besonders gut Zugzylinder unterbringen und diese lassen sich wegen ansonsten gleicher Ausbildung gut mit den jeweiligen Druckzylindern der hinteren Hubeinrichtungen in Reihenschaltung hintereinander schalten, wodurch zudem noch die Angriffspunkte für die Angriffsmittel verhältnismässig tief vorgesehen werden können.

Die vorderen Vertikal-Hubeinrichtungen können in verschiedener Weise gestaltet sein, beispielsweise in einer einfachen Brückenanordnung. Es können vorn die gleichen Zylinder wie hinten verwendet werden. Eine vorteilhafte Ausgestaltung sieht vor, dass die vorderen Vertikal-Hubeinrichtungen zwei durch einen Balken oder ein Joch verbundene Hydraulikzylinder aufweisen und die Angriffsmittel auf dem Balken beziehungsweise Joch gebildet sind. Der gerade durchgehende Balken an den Enden der Kolbenstangen oder Zylinder kann dort eingesetzt werden, wo der Zwischenraum frei überfahren werden kann. Befinden sich im Zwischenraum jedoch Gegenstände, wie Kardanwelle, Getriebe oder sonstiges, so kann ein in der Mitte freies Joch vorgesehen werden. Die Anbringung der vorderen Hubeinrichtung kann mit auf verschiedene Weise ausgebildeten Halteeinrichtungen erfolgen, z.B. mit einfachen Anschraubwinkeln, einer schalenförmig profilierten Blechkonstruktion oder auf einem einfachen durchgehenden Tragbalken. Besonders zweckmässig für die Befestigung auf unterschiedlich ausgestalteten Fahrgestellen mit den verschiedensten Einrichtungen ist eine Portalausbildung, die zudem die Überleitung der Zug- und Stützkräfte auf dem kürzesten Wege mit geringstem Aufwand und einem guten Zusammenhalt ermöglicht. An einem solchen Portal lassen sich auch gut einzelne der Vorrats-, Schalt- und/oder Speiseeinrichtungen, wie beispielsweise ein Hydrauliköltank oder zumindest Hydraulikzusatzöltank, Ventile, Leitungen, Steuerungen, gegebenenfalls eine Pumpe und Verriegelungsmittel unterbringen, die dann mit dem standardisierten Portal vorgefertigt leicht zu montieren und anzuschliessen sind. Auch können hier die Anschlussmittel für die Schalt-, Steuer- und Betriebsmittel von Wechselaufbauten vorgefertigt mit untergebracht werden.

Insbesondere bei Ausführungen mit einem Portal gibt es eine verhältnismässig hohe Lage der Angriffspunkte der Angriffsmittel zwischen Hubeinrichtung und Wechselaufbau im vorderen Bereich. Je nach Ausbildung der Wechselaufbauten können diese hohen Angriffspunkte durch vorn am Wechselaufbau vorgesehene Halteeinrichtungen gut erreicht werden. Eine gut zu standardisierende Lösung, die einerseits eine gute Tragfunktion für die verschiedensten Ausgestaltungen der Aufbauten und einen guten Kraftangriff für die Hubeinrichtungen und gegebenenfalls Verriegelungseinrichtungen zulässt, sieht vor, dass die Wechselaufbauten auf die Längsträger des Fahrzeugrahmens aufsetzende Längsholme aufweisen, die vorn nach Art von Schwanenhälsen hochgezogen sind und an ihren Köpfen die Angriffsmittel tragen. Mit diesen legen sie sich auf die entsprechenden Angriffsmittel an der Hubeinrichtung auf oder greifen in diese ein. Im Bereich der halsartigen Schrägstreben sieht man zudem zweckmässig eine Querverbindungsstange vor, die zwei Längsstreben ohnehin benötigen.

Diese ist als Stützenangriffsstange auszubilden, so dass auch die Stützen einen standardisierten Platz an allen Wechselaufbauten haben, der auch bezüglich der Abstützbasis günstig liegt. Die Auflagearme können an sich zwischen das Portal greifen. Eine Lösung mit breiterer Angriffsbasis bei direkter Abstützung der Zugkräfte in den Portalsäulen und Raumfreiheit innerhalb der Portalsäulen sieht vor, dass die Auflagearme der Wechselaufbau-Längsholme ausserhalb der Portalsäulen liegen und die Auflagen des die Hubeinrichtungen verbindenden Balkens oder Jochs seitlich über die Portalsäulen hinausragen.

Bei der erfindungsgemässen Ausgestaltung mit standardisierten Orten für die erforderlichen Elemente lassen sich auch die für das Einfahren zweckmässigen Einweiser nun gut an stets den gleichen Stellen vorsehen, und zwar insbesondere an den die Angriffsmittel tragenden oder darstellenden Köpfen der Wechselaufbautragkonstruktion und an den Längsholmen mit entsprechenden Gegenflächen an dem Portal bzw. dem Fahrzeugrahmen.

Im Rahmen der Gesamtaufgabe, die für das Lösen und Verbinden des Wechselaufbaus mit dem Fahrzeug erforderlichen oder förderlichen Elemente an standardisierten Stellen unterzubringen, sind auch die Verriegelungsvorrichtungen zwischen Fahrzeugrahmen und Wechselaufbau entsprechend zu legen. Dabei wird von den Grundgedanken Gebrauch gemacht, die in DE-OS 2 137 729 und US-PS 4 165 007 behandelt sind. Bei den bekannten Ausbildungen wird durch Eingriff in schuhförmige Schlitze bzw. unter Hakenschenkeln und Längsverschiebung eine Verriegelung erzielt. Gemäss einer besonderen Ausgestaltung der Erfindung, die allein oder in Verbindung mit den übrigen Merkmalen verwirklicht werden kann, sind mit den Fahrgestell-Längsträgern fest verbundene, an standardisierten Punkten liegende, nach hinten offene, geringfügig elastische Verriegelungshaken vorgesehen, denen in den zugeordneten Vertikallängsebenen der Wechselaufbau-Längsholme nach vorn gerichtete Verriegelungsschuhe zugeordnet sind, die nach Absetzen des Wechselaufbaus von einer Längsverschiebeeinrichtung unter die Haken geschoben werden und wobei die Verriegelungshaken eine Mehrzahl von nach unten auf eine Andrückwalze wirkenden Tellerfedern oder dgl. und starre Auflageflächen für die Begrenzung der Vertikalbewegung aufweisen. So wird die Hauptlast über die aufeinanderliegenden Längsholme und Längsträger abgetragen und die Schuhe halten den Wechselaufbau bei den unvermeidlichen Schwingungen nur auf die Fahrgestell-Längsträger gedrückt, wozu die geringfügige Elastizität, die nunmehr in die Haken verlegt ist, beiträgt. Solche Haken und Schuhe können nunmehr an solchen Stellen angeordnet werden, wo an den Längsträgern an allen in Betracht kommenden Fahrzeugen Platz ist. Die Verriegelung derart grosser Lasten gegen die bei der Fahrt auf der Strasse vorkommenden Schwingungen ohne Betätigung von Einzelspanneinrichtungen stellt viele Probleme. Diese lassen sich besonders gut dadurch lösen, dass man nur einen ganz geringen Federweg zulässt und dann zu einer Festanlage kommt. Die Tellerfedern und Walzen können in einem stabilen Hakengehäuse untergebracht werden und legen sich nach Zurücklegen des geringfügigen Federweges aneinander an. Gleichartig können Blattfederpakete oder dgl. eingelegt sein. Die vordersten Verriegelungshaken verbindet man zweckmässig mit den Füssen des die vorderen Hubeinrichtungen tragenden Portals. So sind stets Fixpunkte im vorderen Endbereich für alle Fahrzeuge automatisch gegeben. Die Verriegelungshaken tragenden Längsprofile in Rohrform gestatten es, Konsolen dafür an beliebigen Stellen vorzusehen, weil die Rohre torsions- und biegesteif sind und so die Abstände zwischen Einleitung der Kräfte an den Haken und Abstützung an den Konsolen gut überbrückt werden können.

Ein Ausführungsbeispiel der Erfindung wird nachfolgend anhand der Zeichnungen näher erläutert und beschrieben.

Es zeigen:

Fig. 1 die perspektivische Schemaansicht des vorderen Teiles eines Lastkraftwagens mit dem vorderen Teil des Traggestelles eines Wechselaufbaus in einer zur besseren Veranschaulichung freischwebenden Darstellung;

Fig. 2 eine der Fig. 1 entsprechende Darstellung des hinteren Teiles des Fahrzeuges nach Fig. 1 mit der angehobenen Stellung des Traggestells für den Wechselaufbau;

Fig. 3 die vergrösserte Teilseitenansicht eines Verriegelungshakens mit dem zugeordneten Verriegelungsschuh mit Andeutung der wesentlichen benachbarten Teile, Haken und Schuhe zum Teil im Vertikalschnitt;

Fig. 4 eine Teildraufsicht auf die Anordnung nach Fig. 3;

Fig. 5 einen Schalt- und Anordnungsplan der Hydraulikzylinder.

Das Transportfahrzeug ist hier ein Lastkraftwagen 1C, dessen Chassis zwei im Profil U-förmige Längsträger 11.1 und 11.2 aufweist. Auf diesen ist das Führerhaus 12 angeordnet. Die Vorderräder sind bei 13 angedeutet und die Hinterräder mit 14 bezeichnet. Kardanwelle, Antriebsachsen und dgl. sind weggelassen. Es ist lediglich eine Hydraulikpumpe 15 erkennbar, die vom nicht dargestellten Motor angetrieben werden kann. Der Getrieberaum ist mit 16 bezeichnet. Vom Wechselaufbau 20 sind nur die beiden Längsholme 21.1 und 21.2 dargestellt, deren Profil U-förmig ist und die in einem Abstand voneinander angeordnet sind, der dem Abstand der Fahrgestell-Längsträger 11 entspricht, so dass ihre unteren Auflageschenkel 21.3 und 21.4 auf die oberen Auflageschenkel 11.3 und 11.4 der Fahrgestell-Längsträger 11 aufgesetzt werden können. Die Längsholme 21 sind durch Querstreben 22 verbunden. Hier sind sie beispielsweise für das Aufsetzen eines Dreiseitenkippers ausgestattet und tragen hinten ein Drehlagerrohr 23.1 und weiter vorn eine Quertraverse 23.2, die die übliche Breite hat und an ihren Enden die Kipplager 23.4 und 23.5 trägt. Entsprechende Kipplager 23.6 und 23.7 sind an dem Drehelement des Drehlagerrohrs 23.1 vorgesehen. In der Mitte dazwischen ist noch die Stützeinrichtung 23.8 für den Kippzylinder angedeutet.

Die hinteren Enden der beiden Wechselaufbau-Längsholme 21 haben nach unten ragende Tragarme 23.9, an denen hinten ein Querrohr 24 befestigt ist, welches Quadratquerschnitt hat, dessen Diagonalen horizontal bzw. vertikal stehen. Dieses Querrohr 24 ist zugleich Auffahrschutz und Abstützmittel für den vom Fahrzeug abgenommenen Zustand, indem nämlich auf seine Enden 24.1 und 24.2 oder in diese hinein Bodenstützen gesteckt werden können. Auch können sonstige Angriffsmittel für das Umsetzen oder Abstützen bei Belade-, Entlade- oder Fertigungsabläufen angesetzt werden.

Die vorderen Enden der Wechselaufbau-Längsholme 21 sind nach Art von Schwanenhälsen hochgezogen, und zwar schliessen zunächst nach oben sich verjüngende Schrägstreben 21.5 und 21.6 an die vorderen Enden der horizontalen Abschnitte an. Diese tragen eine Querverbindungs- und Stützenangriffsstange 24.4, an deren Enden 24.5 und 24.6 Bodenstützen oder sonstige Stützen oder Anschlagmittel angreifen können, die der Abstützung für den vom Fahrzeug abgenommenen Zustand dienen. Diese Stützenangriffsstange 24.4 hat in einem weit vorn liegenden Bereich eine feste Position für möglichst alle Wechselaufbauten an einer Stelle, an der sie den Einbau sonstiger Elemente nicht behindert. Etwas nach aussen versetzt sind auf der Querverbindungs- und Stützenangriffsstange 24.4 die Köpfe 21.7 und 21.8 des Wechselaufbau-Tragrahmens bzw. seiner Längsholme 21 angeschweisst. Sie tragen als Angriffsmittel für die vordere vertikale Hubeinrichtung horizontale Auflagearme 25.1 und 25.2, die als nach aussen offene, hochkant stehende U-Profile gestaltet sind. Ihre vorderen Enden 25.3, von denen der Übersichtlichkeit halber nur das rechte dargestellt ist, sind mit nach vorn divergierenden · Einweiseflächen 25.4 versehen.

Unmittelbar hinter dem Führerhaus in dem Raum zwischen Führerhausrückwand 12.1 und Wechselaufbau 20 sind die vorderen Hubeinrichtungen 30 angeordnet. Diese haben als Traggestell ein Portal 30.1 mit seitlichen Säulen 30.2 und 30.3, die mit unteren Befestigungsfüssen 30.4 und 30.5 auf den Chassis-Längsträgern 11.1 und 11.2 im Bereich der Vorderachse 13 soweit wie möglich vorn befestigt sind. Eine Querstrebe 30.6 verbindet die unteren Enden der Portalsäulen 30.2 und 30.3 in einem freien Raum oberhalb des Getrieberaumes 16. Eine Querstrebe 30.7 verbindet die oberen Enden der Portalsäulen 30.2 und 30.3. Gleichartige Querstreben können auch dem Führerhaus benachbart liegen, da jede Portalsäule 30.2 bzw. 30.3 aus zwei Eckstützen besteht, die zwischen sich jeweils einen Schlitz 31 freilassen. Oben auf den Portalsäulen 30.2 und 30.3 sind als vordere Vertikal-Hydraulik-Hubeinrichtungen zwei Hydraulikzylinder 32.1 und 32.2 stehend befestigt. Sie ragen also von ihrer Befestigung auf dem Portal 30.1 aus nach oben in den freien Raum hinter dem Führerhaus 12. Sie werden in der ganzen Beschreibung, dem deutschen Fachsprachgebrauch entsprechend, nur als Hydraulikzylinder bezeichnet, obwohl die genauere Bezeichnung Kolben-Zylinder-Aggregat lauten müsste. Die Hydraulikzylinder sind hier als Zugzylinder angeordnet. Das heisst, die Kolbenstangen 32.3 (und – nicht sichtbar – 32.4) fahren nach unten aus und die Last hängt an den Kolbenstangen. Es handelt sich um doppelt wirkende Hydraulikzylinder mit einseitigen Kolbenstangen, deren Durchmesser geringer ist als der der Kolben. Es sind hier völlig gleiche Hydraulikzylinder mit gleichen Kolbendurchmessern und gleichen Kolbenstangendurchmessern vorgesehen. Sie tragen an ihren Gabelköpfen 32.51 und 32.61 einen geraden Balken 35, dessen Enden, wie bei 35.2 veranschaulicht, durch die Schlitze 31 nach aussen ragen und die Angriffsmittel für den Angriff am Wechselaufbau 20 darstellen. Sie haben obere ebene Auflageflächen 35.4 mit vertikalen Begrenzungsflächen 35.5, die etwas ausserhalb der Portalsäulen 30.2 und 30.3 liegen, um Reibungen der Auflagearme 25.1 und 25.2 zu vermeiden. An den Portalsäulen 30.2 und 30.3 können vorzugsweise Verstärkungen als Einweisegleitflächen 36 aufgesetzt sein, gegen die die Einweiseflächen 25.4 beim Einfahren des Fahrzeuges unter den Wechselaufbau anstossen können. Wie ersichtlich, sind die vorderen Hubeinrichtungen 30 oberhalb der Wechselaufbauunterkante angeordnet. Die Wechselaufbauunterkante im Sinne des Hauptanspruches wird durch die Auflageflächen 21.3 und 21.4 der Längsholme 21 bzw. die entsprechenden Gegenflächen der Schenkel 11.3 und 11.4 der Fahrzeuglängsträger 11 bestimmt, obwohl unter Umständen seitlich und vor allem hinten noch einige Teile nach unten hinaushängen können. Bei dieser Kante oder Fläche geht es um die sich über das Fahrzeug schiebende Fläche. Die Portalanordnung und die Angriffsmittel 25 und 35 sind nun nicht nur oberhalb dieser Ebene angeordnet, sondern bei diesem Beispiel auch neben dem Getrieberaum 16, für den zwischen den Portalfüssen 30.4 und 30.5 ein Freiraum geschaffen ist. Wenn ein grösserer Freiraum in diesem Bereich benötigt wird, kann auch anstelle des geradlinigen durchgehenden Balkens 35 als Verbindung ein Joch vorgesehen sein, welches etwa ⌐L-förmig gestaltet ist. Auch kann man gegebenenfalls auf die Verbindung der Kolbenstangen der Hydraulikzylinder 32 verzichten und einen direkten Angriff an den Kolbenstangen vorsehen. Durch die Anordnung als stehende und beim Anheben als Zugzylinder wirkende Hubeinrichtungen sind die Zylinder 32 in einem bei praktisch allen in Betracht kommenden Fahrzeugen günstigen Raum untergebracht, so dass die Räume rechts und links der Fahrgestell-Längsträger 11 mit hier nur links schematisch dargestellten Pressluftbehältern 38 und Batteriekästen 39, Treibstofftanks oder sonstigen Einrichtungen versehen sein können. Auch kann eine Vielzahl anderer, hier nicht dargestellter Einrichtungen an beliebigen Stellen eingebaut werden.

Auf dem Portal 30.1 ist noch ein Hydraulikölvorratsbehälter 40 für die Speisung der Hubeinrichtungen vorgesehen. Auch die Anschlussleitungen sowie die Verbindungsleitung 41 zwischen dem Vorratsbehälter 40 und der Pumpe 15 sind am Portal angeordnet. An einem seitlich vom Portal liegenden, mit diesem fest verbundenen Träger 42 sind die im einzelnen nicht näher bezeichneten Steuereinrichtungen 43, wie Ventile, Leitungen und dgl., für die Hubeinrichtungen und sonstige Versorgungen des Wechselaufbaus befestigt. Auch diese liegen in dem Raum unmittelbar hinter dem Führerhaus 12 und bilden mit dem Portal 30.1 eine Baueinheit, die beispielsweise mit Hilfe der Stütz- und Befestigungsbleche 30.8 an den Fahrzeuglängsträgern 11 angeschweisst oder sonstwie befestigt sein kann.

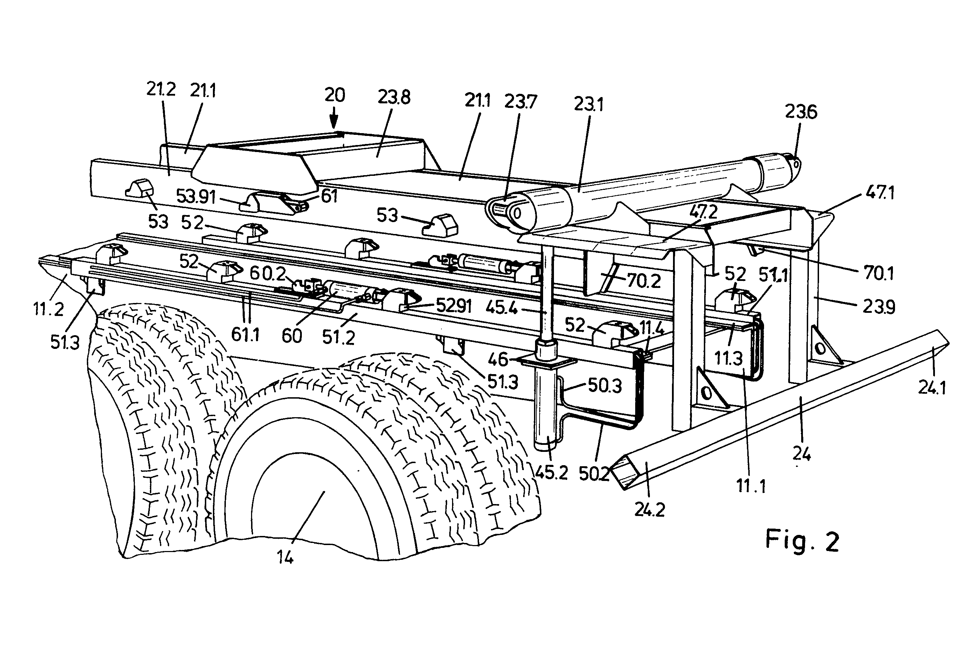

Wie aus Fig. 2 hervorgeht, sind die hinteren Hubeinrichtungen in Form von zwei Hydraulikzylindern 45 in üblicher Weise im Bereich der Hinterachse 14 angeordnet. Es ist nur der linke Hydraulikzylinder 45.2 zu sehen. Er ist hängend unter einer Tragplatte 46 befestigt. Die Tragplatte 46 ist jeweils ausserhalb am Fahrgestell-Längsträger 11 angeschweisst. Die Kolbenstange 45.4 kann nach oben ausgefahren werden, um den Wechselaufbau 20 anzuheben, so dass der doppelt wirkende Hydraulikzylinder 45 als Druckzylinder arbeitet. Für das Angreifen der beiden Kolbenstangen und als Schutz gegen Verschmutzung sind Abdeck- und Angriffsplatten 47.1 und 47.2 vorgesehen, unter deren linken sich die Kolbenstange 45.4, wie ersichtlich, einfach abstützt, wenn der Wechselaufbau in seiner entsprechenden Stellung ist. Der Durchmesser der Kolbenstange 45.4 ist dem Durchmesser der Kolbenstange des vorderen Hy

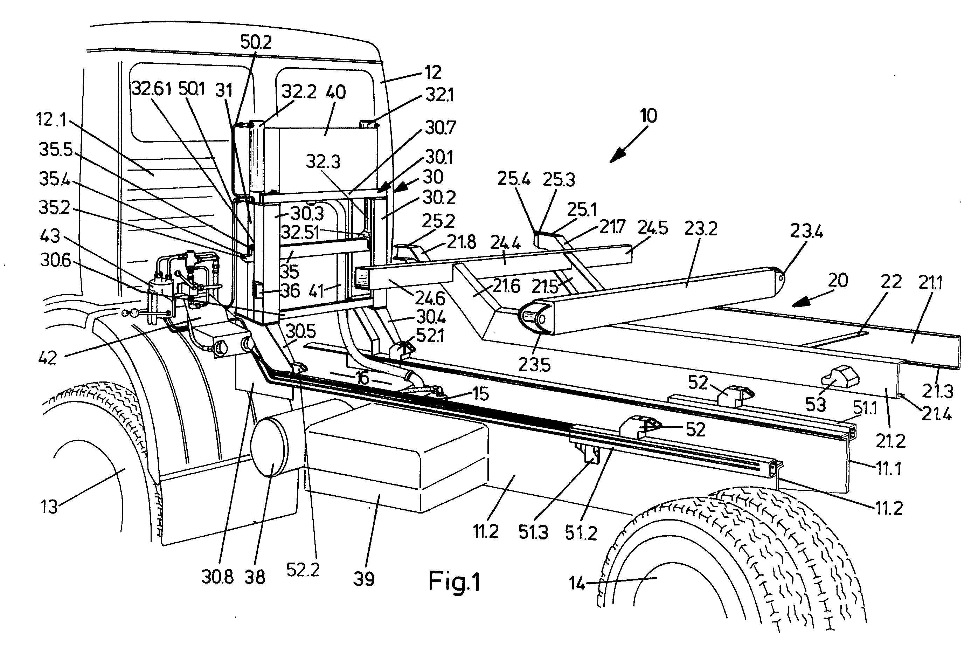

draulikzylinders 32.2 genau gleich. Auch die beiden Kolbenflächen sind genau gleich. Nur wird die Kolbenstange des Hydraulikzylinders 32.2 eingezogen, um den Wechselaufbau 20 anzuheben, während die Kolbenstange 45.4 gleichzeitig um völlig gleiche Beträge ausgefahren wird, so dass ein paralleles Anheben erfolgt. Gleiches gilt für die Hydraulikzylinder der anderen Seite. Um das zu erreichen, sind die Kolbenflächen und auch die Kolbenringflächen beider Zylinder gleich und alle Kolben-Zylinder-Aggregate sind doppelwirkend, also auch im Kolbenstangenraum abgedichtet. Durch die paarweise Anordnung als Druckzylinder und Zugzylinder ist eine Gleichlaufschaltung so in einfacher Weise mit Normzylindern möglich. Dazu führt, wie insbesondere aus Fig. 5 ersichtlich, die Ventilleitung 50.1 in den Kolbenstangenraum 32.8 des Hydraulikzylinders 32.2, also den Raum, in dem sich die Kolbenstange bewegt, während die Verbindungsleitung 50.2 vom oberhalb des Kolbens liegenden Kolbenraum 32.6 des Hydraulikzylinders 32.2 durch ein seitliches Verriegelungs- und Schutzrohr 51.2 (Fig. 1 und 2) zu dem Kolbenraum 45.6 des hinteren Hubzylinders 45.2 führt, weil diese Räume gleiche Verdrängungsflächen haben. Eine weitere Verbindungsleitung 50.3 führt vom Kolbenstangenraum 45.8 des Hydraulikzylinders 45.2 zu dem Kolbenstangenraum 32.7 des vorderen rechten Hydraulikzugzylinders 32.1, während eine weitere Verbindungsleitung 50.4 von dem Kolbenraum 32.5 dieses Zylinders 32.1 zu dem Kolbenraum 45.5 des rechten hinteren Druckzylinders 45.1 führt. Von dem Kolbenstangenraum 45.7 dieses hinteren rechten Druckzylinders 45.1 führt dann eine Ventilleitung 50.5 zu der Ventil- und Steuereinheit 43. So wird mit äusserst einfachen Mitteln wegen der zusammengeschalteten Räume mit jeweils gleichen Verdrängungsvolumina eine äusserst günstig herzustellende und auszuwählende Gleichlaufschaltung verwirklicht, die vor allem durch die günstige Unterbringung der Zugzylinder ermöglicht wird, deren Lage die Unterbringung sonstiger Elemente nicht behindert. Leckverlustausgleichsventile 65 sind in den Kolben angeordnet, um stets auch bei unterschiedlichen Leckverlusten gleichmässiges Anheben und Absenken zu sichern.

Für die Verriegelung des Wechselaufbaus 20 auf dem Fahrgestell ist eine besondere Anordnung getroffen. Neben den und über die Oberkanten 11.3 und 11.4 der Fahrgestell-Längsträger 11 sind Rechteck-Hohlprofilrohre 51.1 und 51.2 gesetzt und mit an diesen festgeschweissten Laschen 51.3 versehen. Die Laschen 51.3 werden mit Schrauben an den Fahrgestell-Längsträgern 11 an freien Stellen, an denen Befestigungsbohrungen vorhanden sind oder angebracht werden können, angeschraubt. Die Hohlprofilrohre 51 nehmen einerseits, wie erläutert, Leitungen auf und dienen andererseits zur genormten Befestigung von Verriegelungshaken 52. Dieser Platz ist von sonstigen Elementen normalerweise nicht belegt, weil er unmittelbar neben den Trägern liegt. Wie ersichtlich, ist eine Mehrzahl von solchen Haken im Abstand voneinander auf dem Verriegelungs- und Schutzrohr 51 angebracht, beispielsweise angeschweisst. Die Befestigung auf biege- und torsionssteifen Rohren hat den Vorteil, dass die Befestigungslaschen 51.3 oder Konsolen an beliebigen Stellen je nach den individuellen Bedürfnissen des Fahrzeugs befestigt werden können und dadurch auch Abstände zwischen Einleitung der Kräfte an den Haken 52 und Abstützung der Kräfte an den Laschen 51.3 überbrückt werden können, wenn das nötig ist. Die vordersten Verriegelungshaken 52.1 und 52.2 sind, wie aus Fig. 1 ersichtlich, unmittelbar an den Füssen 30.4 und 30.5 des Portals 30.1 befestigt, so dass hier jeweils ein erster schon vorgefertigt angebrachter Fixpunkt gegeben ist. Wie ersichtlich, sind die Verriegelungshaken 52 nach hinten offen. Ihnen sind in den entsprechenden Ebenen Verriegelungsschuhe 53 zugeordnet, die an den Innenwänden der Wechselaufbau-Längsträger 21.1 und 21.2 angeschweisst sind.

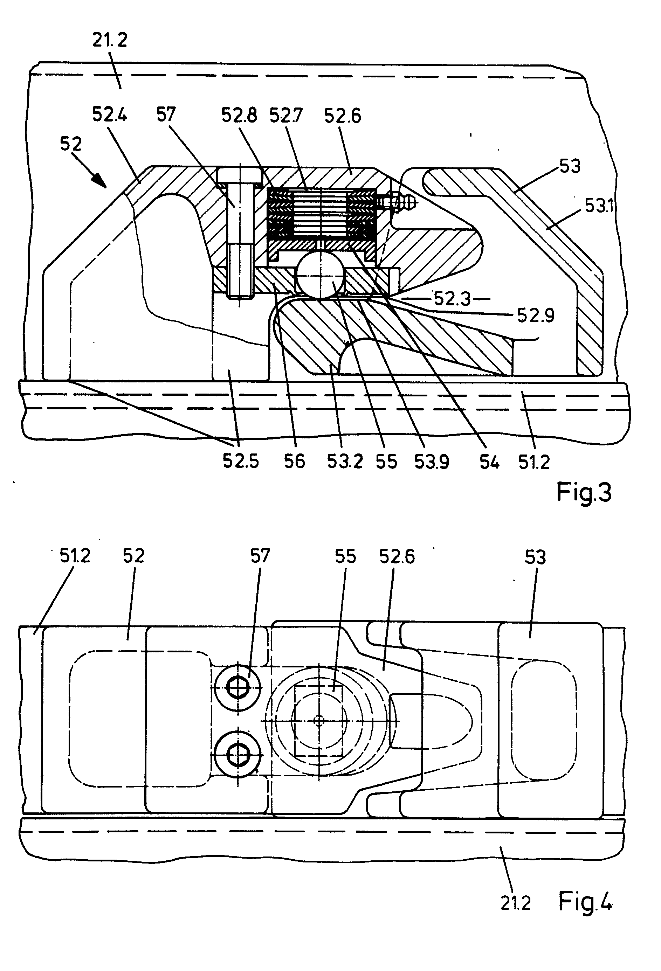

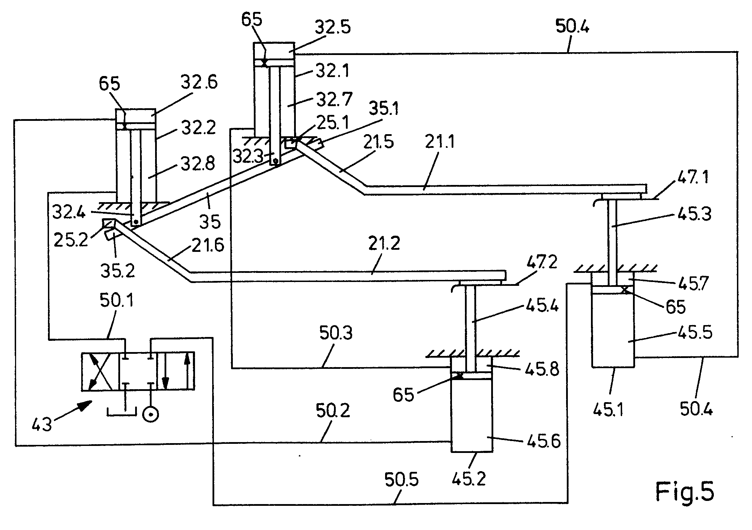

Die konstruktiven Einzelheiten gehen näher aus den Fig. 3 und 4 hervor.

Die Verriegelungsschuhe 53 sind beispielsweise als Guss- oder Schmiedeteile ausgebildet und haben ein, wie ersichtlich, profiliertes Gehäuse 53.1, welches einen steifen Querschnitt bildet und eine verstärkte, nach vorn ragende Verriegelungsschuhspitze 53.2 aufweist. Diese greift in das Maul 52.3 des Verriegelungshakens 52 ein. Dieser hat ein beispielsweise aus Guss oder im Schmiedeverfahren hergestelltes Gehäuse 52.4 mit Befestigungsfüssen 52.5 und einem Federaufnahmeteil 52.6, in dessen Federbohrung 52.7 ein Paket von Tellerfedern 52.8 liegt, die auf einer Druckplatte 54 aufsitzen, welche wiederum auf die Anpresswalze 55 drückt, die in einer Halteplatte 56 unverlierbar, jedoch drehbar gehalten ist. Zwei Schrauben 57 halten die Halteplatte 56 fest. Die Abmessungen sind so getroffen, dass der Federweg etwa 1,5 bis 2 mm beträgt und die Walze dann so weit eingedrückt ist, dass eine Festabstützung der Anlageflächen 53.9 der Verriegelungsschuhe 53 an den Anlageflächen 52.9 der Verriegelungshaken 52 erfolgt, so dass grössere Schwingungen und Bewegungen des Wechselaufbaus vermieden werden. Die Tellerfedern 52.8 jedes Verriegelungshakens 52 bringen eine Kraft von ca. 1,5 bis 2 to auf. Das entspricht etwa der Spannkraft einer Spindelverspannung.

Ein Vorschubzylinder 60, der über Leitungen 60.1 mit der Steuereinheit 43 verbunden ist, ist an dem Verriegelungshaken 52.91 befestigt und wirkt mit seiner Kolbenstange auf einen nach oben offenen Verschiebehaken 60.2. Diesem ist eine Verschiebeklinke 61 zugeordnet, die an dem Verriegelungsschuh 53.91 nach oben schwenkbar befestigt ist. Eine gleichartige Anordnung ist auf der anderen Seite getroffen.

Hinter den Druckzylindern 45 sind an den Längsholmen 21 nach unten divergierende Einweiser 70 befestigt.

Das Aufladen eines Wechselaufbaus geschieht folgendermassen:

Der Wechselaufbau 20 steht auf nicht dargestellten Stützen, die auf die Enden 24.1, 24.2, 24.5 und 24.6 der Abstützmittel für den vom Fahrzeug angenommenen Zustand aufgesteckt sind. Die Kolbenstangen 45.3 und 45.4 der hinteren Vertikal-Hydraulik-Hubzylinder 45 sind eingezogen, während die Kolbenstangen 32.3 und 32.4 der beiden vorderen Vertikal-Hydraulik-Hubzylinder 32.1 und 32.2 ausgefahren sind. Das Motorfahrzeug fährt entsprechend ausgerichtet unter den Wechselaufbau 20. Die Einweiser 25.4 richten in der Endphase an den Einweiserflächen 36 Fahrzeug und Wechselaufbau genau zueinander aus. Bei Erreichen einer Position, in der sich die Spitzen 53.2 der Verriegelungsschuhe 53 hinter den Verriegelungshaken 52 befinden, wird angehalten. Nun werden im Gleichlauf durch Betätigung des entsprechenden Ventilhebels die vier Gleichlaufzylinder vom Druckmittel so beaufschlagt, dass dieses durch die Zuflussleitung 50.1 die Kolbenringfläche im Kolbenstangenraum 32.8 des Hydraulikzylinders 32.2 beaufschlagt. Das aus dem Kolbenraum 32.6 dieses Zylinders 32.2 herausgedrückte Öl gelangt durch die Leitung 50.2 in den Kolbenraum 45.6 gleicher Verdrängungsfläche im Zylinder 45.2, so dass die Kolbenstange 45.4 ausgefahren und gleichzeitig das vor der Ringfläche befindliche Öl durch die Leitung 50.3 in den Ringraum 32.7 des Zugzylinders 32.1 geführt wird, während das Öl aus dem Kolbenraum 32.5 dieses Zylinders in den Kolbenraum 45.5 des hinteren rechten Hubzylinders 45.1 geführt wird, so dass auch dessen Kolbenstange 45.3 ausfährt. Die hinteren Kolbenstangen 45.3, 45.4 setzen sich unter die Abstützplatten 47.1 und 47.2, während die Auflageflächen 35.4 unter den Abstützungen in Form der Auflagearme 25.1 und 25.2 zur Anlage kommen. Der Wechselaufbau 20 wird geringfügig angehoben. Die Stützen werden abgenommen. Der Wechselaufbau wird nun durch Umschalten des Hydrauliksystems bei entsprechender umgekehrter Verdrängung im Gleichlauf abgesenkt, bis die Flächen der Auflageschenkel 21.3 und 21.4 auf den Flächen der Auflageschenkel 11.3 und 11.4 aufliegen. Während dieses Senkvorganges kommen im Bereich der hinteren Hydraulikzylinder 45 die Einweiser 70.1 und 70.2 zur Wirkung, die den Wechselaufbau 20 zum Fahrzeugchassis 11 ausrichten. Nach dem Aufsetzen wird noch geringfügig weiter abgesenkt, bis die Kolbenstangen ihre untere Totlage erreicht haben. In dieser Lage haben sich auch die Klinken 61 in die Verschiebehaken 60.2 eingelegt. Durch Beaufschlagung der Verschiebezylinder 60 wird nun der Wechselaufbau 20 weiter nach vorne geschoben, bis die Spitzen 53.2 unter die Walzen 55 aller Verriegelungshaken gelangen. Die Tellerfedern werden je nach Fertigungstoleranzen zusammengedrückt und halten den Aufbau nunmehr in der gewünschten Lage. Eine nicht dargestellte mechanische Verriegelung, die von Hand einzulegen ist, sichert zusätzlich gegen eine Verschiebung des Wechselaufbaus nach hinten. Das Abladen geschieht in umgekehrter Reihenfolge.

Wenn man auf die vorteilhafte Gleichlaufschaltung mit gleichen Kolben-Zylinder-Aggregaten verzichten will, kann man bei der konstruktiv und montagemässig günstigen Portalanordnung Druckzylinder stehend mit nach oben ausfahrenden Kolbenstangen anordnen und entweder die Angriffspunkte weit nach oben verlegen oder ausserhalb der Zylinder Verbindungen zwischen unteren Angriffspunkten und den oberen Kolbenstangen nach Art eines Hutprofils oder einer Hubglocke oder eines Hubjoches vorsehen.

**Patentansprüche**

1. Transportfahrzeug (10) mit fahrzeugfesten Vertikal-Hydraulik-Hubeinrichtungen für Wechselaufbauten (20), die vordere und hintere Angriffsmittel zum Heben mit den Hubeinrichtungen und Abstützmittel (24) für den vom Fahrzeug abgenommenen Zustand aufweisen, wobei die vorderen Hubeinrichtungen (30; 32.1, 32.2) unmittelbar vor dem Wechselaufbau (20) und oberhalb der Wechselaufbauunterkante (21.3, 21.4) angeordnet und die hinteren Vertikal-Hubeinrichtungen (45) im Bereich der Hinterachse (14) angeordnet sind, dadurch gekennzeichnet, dass die vorderen Hubeinrichtungen Zugzylinder (32) und die hinteren Hubeinrichtungen Druckzylinder (45) gleichen Kolbendurchmessers und gleichen Kolbenstangendurchmessers sind, die in Gleichlaufschaltung derart in Reihe geschaltet sind, dass Kolbenstangenräume (45.8) mit Kolbenstangenräumen (32.7) und Kolbenräume mit Kolbenräumen (45.6, 32.6; 32.5; 45.5) verbunden und Zulauf und Ablauf entweder an Kolbenstangenräumen (32.8, 45.7) oder an Kolbenräumen angeschlossen sind.

2. Transportfahrzeug nach Anspruch 1, dadurch gekennzeichnet, dass die vorderen Vertikal-Hubeinrichtungen (30) zwei durch einen Balken (35) oder ein Joch verbundene Hydraulikzylinder (32.1, 32.2) aufweisen und die Angriffsmittel (35.2, 35.4) der Vertikal-Hubeinrichtungen auf dem Balken (35) bzw. Joch gebildet sind.

3. Transportfahrzeug nach Anspruch 2, dadurch gekennzeichnet, dass die vorderen Hubeinrichtungen (30) mit wenigstens einzelnen der Vorrats-, Schalt- und Speiseeinrichtungen (40, 41, 50; 42, 43) in einem auf dem Fahrzeugrahmen (11) befestigten Portal (30.2, 30.3, 30.7) angeordnet sind.

4. Transportfahrzeug nach einem der Ansprüche 1 bis 3, dadurch gekennzeichnet, dass die Wechselaufbauten (20) auf die Längsträger (11) des Fahrzeugrahmens aufsetzende Längsholme (21) aufweisen, die vorn nach Art von Schwanenhälsen (21.5, 21.6, 21.7, 21.8; 25.1, 25.2) hochgezogen sind und an ihren Köpfen (21.7, 21.8) als Bestandteile der Angriffsmittel Auflagearme (25.1, 25.2) tragen und im Bereich der halsartigen Schrägstreben (21.5, 21.6) eine Querverbindungs- und Stützenangriffsstange (24.4) aufweisen.

5. Transportfahrzeug nach den Ansprüchen 3 und 4, dadurch gekennzeichnet, dass die Auflagearme (25.4, 25.2) ausserhalb der Portalsäulen (30.2, 30.3) liegen und die Auflagen (35.4) des die Hubeinrichtungen (32.1, 32.2) verbindenden Balkens (35) oder Jochs seitlich über die Portalsäulen (30.2, 30.3) hinausragen.

6. Transportfahrzeug nach Anspruch 5, dadurch gekennzeichnet, dass im Bereich der Köpfe (21.7, 21.8) des Wechselaufbaurahmens nach vorn divergierende Einweiserflächen (25.4) vorgesehen sind, denen Einweiserflächen (36) an den Portalsäulen (30.2, 30.3) zugeordnet sind, und dass im hinteren Bereich der Wechselaufbaulängsholme (21) nach unten divergierende Einweiserflächen (70.1, 70.2) angeordnet sind.

7. Transportfahrzeug (10) mit fahrzeugfesten Vertikal-Hydraulik-Hubeinrichtungen für Wechselaufbauten (20), die vordere und hintere Angriffsmittel zum Heben mit den Hubeinrichtungen und Abstützmittel (24) für den vom Fahrzeug abgenommenen Zustand aufweisen, wobei die vorderen Hubeinrichtungen (30; 32.1, 32.2) unmittelbar vor dem Wechselaufbau (20) und oberhalb der Wechselaufbauunterkante (21.3, 21.4) angeordnet und die hinteren Vertikal-Hubeinrichtungen (45) im Bereich der Hinterachse (14) angeordnet sind, dadurch gekennzeichnet, dass mit den Fahrgestell-Längsträgern (11) fest verbundene, nach hinten offene, geringfügig elastische Verriegelungshaken (52) vorgesehen sind, denen in den zugeordneten Vertikal-Längsebenen der Wechselaufbaulängsholme (21) nach vorn gerichtete Verriegelungsschuhe (53) zugeordnet sind, die nach Absetzen des Wechselaufbaus (20) von einer Längsverschiebeeinrichtung (60, 61) unter die Haken (52) geschoben werden und wobei die Verriegelungshaken (52) eine Mehrzahl von nach unten auf eine Andrückwalze (55) wirkende Tellerfedern (52.8) oder dgl. und starre Anlageflächen (52.9, 53.9) für die Begrenzung der Vertikalbewegung aufweisen.

8. Transportfahrzeug nach Anspruch 7, dadurch gekennzeichnet, dass die vorderen Verriegelungshaken (52.1, 52.2) an den Befestigungsfüssen (30.4, 30.5) der Portalsäulen (30.2, 30.3) angeordnet sind.

9. Transportfahrzeug nach Anspruch 7 oder 8, dadurch gekennzeichnet, dass die Verriegelungshaken (52) auf sie tragenden Längsprofilen (51) mit Rohrform angebracht sind.

## Claims

1. A transport vehicle (10) with hydraulic vertical lifting devices, which are fast with the vehicle, for interchangeable bodies (20), and which have front and rear engagement means for lifting with the lifting devices and support means (24) for the body when separated from the vehicle, the front lifting devices (30; 32.1, 32.2) being disposed directly in front of the interchangeable body (20) and above the lower edge (21.3, 21.4) of the interchangeable body and the rear vertical lifting devices (45) being disposed in the region of the rear axle (14), characterised in that the front lifting devices are traction cylinders (32) and the rear lifting devices are thrust cylinders (45) of the same piston diameter and the same piston rod diameter, which cylinders are connected in a synchronising circuit in series in such a way that piston rod spaces (45.8) communicate with piston rod spaces (32.7) and piston spaces communicate with piston spaces (45.6, 32.6; 32.5; 45.5) and feed and return are connected either to piston rod spaces (32.8, 45.7) or to piston spaces.

2. A transport vehicle according to claim 1, characterised in that the front vertical lifting devices (30) have two hydraulic cylinders (32.1, 32.2) which are connected by means of a beam (35) or a yoke, and the engagement means (35.2, 35.4) of the vertical lifting devices are formed on the beam (35) or yoke.

3. A transport vehicle according to claim 2, characterised in that the front lifting devices (30) are arranged with at least some of the supply, switching and storage devices (40, 41, 50; 42, 43) in a frame (30.2, 30.3, 30.7) which is secured on the vehicle frame.

4. A transport vehicle according to any one of claims 1 to 3, characterised in that the interchangeable bodies (20) have longitudinal struts (21) which are positioned on the longitudinal supports (11) of the vehicle frame and which are raised at the front in the manner of swans' necks (21.5, 21.6, 21.7, 21.8; 25.1, 25.2) and on their heads (21.7, 21.8) support support arms (25.1, 25.2) as parts of the engagement means and have a transverse connection and supporting engagement rod (24.4) in the region of the neck-like diagonal struts (21.5, 21.6).

5. A transport vehicle according to claims 3 and 4, characterised in that the support arms (25.4, 25.2) are arranged outside the frame columns (30.2, 30.3), and the supports (35.4) of the beam (35) or the yoke which connects the lifting devices (32.1, 32.2) project laterally beyond the frame columns (30.2, 30.3).

6. A transport vehicle according to claim 5, characterised in that in the region of the heads (21.7, 21.8) of the interchangeable body frame, guide surfaces (25.4) which diverge forwards are provided, with which guide surfaces (36) on the frame columns (30.2, 30.3) are associated, and that guide surfaces (70.1, 70.2) which diverge downwards are arranged in the rear region of the longitudinal struts (21) of the interchangeable body.

7. A transport vehicle (10) with hydraulic vertical lifting devices which are fast with the vehicle for interchangeable bodies (20), and which have front and rear engagement means for lifting with the lifting devices, and support means (24) for the position assumed by the vehicle, the front lifting devices (30; 32.1, 32.2) being disposed directly in front of the interchangeable body (20) and above the lower edge (21.3, 21.4) of the interchangeable body and the rear vertical lifting devices (45) being disposed in the region of the rear axle (14), characterised in that slightly resilient locking hooks (52) which are open at the rear and which are rigidly connected to the longitudinal supports (11) of the vehicle chassis are provided, with which forwards orientated locking shoes (53), which are pushed below the hooks (52) by a longitudinal displacement device (60, 61) after the interchangeable body has been set down, are associated in the respective vertical longitudinal planes of the longitudinal struts of the interchangeable body, and the hooks (52) have a plurality of plate springs (52.8) or the like which act downwards on an auxiliary roller (55), and rigid contact surfaces (52.9, 53.9) for restricting vertical movement.

8. A transport vehicle according to claim 7, characterised in that the front locking hooks (52.1, 52.2) are disposed on the securing feet (30.4, 30.5) of the frame columns (30.2, 30.3).

9. A transport vehicle according to claim 7 or 8, characterised in that the locking hooks (52) are arranged on longitudinal profiles (51), in the form of a tube, which support the said locking hooks (52).

**Revendications**

1. Véhicule de transport (10) équipé d'appareils hydrauliques de levage vertical solidaires du véhicule pour des caisses, carrosseries ou ensembles analogues (20) qui sont interchangeables et qui présentent à l'avant et à l'arrière des moyens d'attaque pour leur soulèvement par les appareils de levage et des moyens pour l'appui (24) lorsqu'ils sont séparés du véhicule, les appareils de levage avant (30; 32.1, 32.2) étant disposés directement devant la case interchangeable (20) et au-dessus du côté inférieur (21.3, 21.4) de la caisse et les appareils de levage vertical à l'arrière (45) étant disposés dans la région de l'essieu arrière (14), caractérisé en ce que les appareils de levage avant sont des vérins tirants (32) et les appareils de levage arrière sont des vérins poussants (45) de même diamètre de piston et de même diamètre de tige de piston, qui sont montés en série dans un circuit de synchronisation où des chambres côté tige (45.8) sont reliées à des chambres côté tige (32.7), des chambres côté piston sont reliées à des chambres côté piston (45.6, 32.6; 32.5; 45.5) et l'arrivée et le retour sont branchés soit sur des chambres côté tige (32.8, 45.7), soit sur des chambres côté piston des vérins.

2. Véhicule selon la revendication 1, caractérisé en ce que les appareils de levage vertical à l'avant (30) présentent deux vérins hydrauliques (32.1, 32.2) qui sont reliés par une poutre (35) ou un palonnier et les moyens d'attaque (35.2, 35.4) des appareils de levage vertical sont formés sur la poutre (35) ou le palonnier.

3. Véhicule selon la revendication 2, caractérisé en ce que les appareils de levage à l'avant (30) sont disposés, avec au moins quelques-uns des dispositifs de réserve, de commutation et d'alimentation (40, 41, 50; 42, 43), dans un portique (30.2, 30.3, 30.7) fixé sur le châssis (11) du véhicule.

4. Véhicule selon une des revendications 1 à 3, caractérisé en ce que les caisses interchangeables (20) présentent des poutres longitudinales (21), à poser sur les longerons (11) du châssis du véhicule, qui sont relevées à l'avant à la façon de cols de cygne (21.5, 21.6, 21.7, 21.8; 25.1, 25.2), qui portent à leurs têtes (21.7, 21.8), en tant que constituants des moyens d'attaque, des bras d'appui (25.1, 25.2) et présentent, dans la région des portions obliques en forme de cols (21.5, 21.6), une barre (24.4) de liaison transversale et d'attaque pour des béquilles.

5. Véhicule selon les revendications 3 et 4, caractérisé en ce que les bras d'appui (25.4, 25.2) sont situés à l'extérieur des colonnes (30.2, 30.3) du portique et les appuis (35.4) de la poutre (35) ou du palonier reliant les appareils de levage (32.1, 32.2) font saillie latéralement des colonnes (30.2, 30.3) du portique.

6. Véhicule selon la revendication 5, caractérisé en ce que des surfaces de guidage d'entrée (25.4) qui divergent vers l'avant sont prévues dans la région des têtes (21.7, 21.8) du cadre de la caisse interchangeable, auxquelles sont associées des surfaces de guidage d'entrée (36) sur les colonnes (30.2, 30.3) du portique, et en ce que des surfaces de guidage d'entrée (70.1, 70.2) qui divergent vers le bas sont disposées dans la région arrière des poutres longitudinales (21) de la caisse interchangeable.

7. Véhicule de transport (10) équipé d'appareils hydrauliques de levage vertical solidaires du véhicule pour des caisses, carrosseries ou ensembles analogues (20) qui sont interchangeables et qui présentent à l'avant et à l'arrière des moyens d'attaque pour leur soulèvement par les appareils de levage et des moyens pour l'appui (24) lorsqu'ils sont séparés du véhicule, les appareils de levage avant (30; 32.1, 32.2) étant disposés directement devant la case interchangeable (20) et au-dessus du côté inférieur (21.3, 21.4) de la caisse et les appareils de levage vertical à l'arrière (45) étant disposés dans la région de l'essieu arrière (14), caractérisé en ce que des crochets de verrouillage (52) légèrement élastiques et ouverts vers l'arrière sont reliés fixes aux longerons (11) du châssis du véhicule, avec lesquels sont combinés, dans des plans longitudinaux verticaux correspondants des poutres longitudinales (21) des caisses interchangeables, des sabots de verrouillage (53) dirigés vers l'avant et qui, après la pose de la caisse interchangeable (20) sur les longerons, sont poussés sous les crochets (52) par un dispositif de coulissement longitudinal (60, 61), les crochets de verrouillage (52) présentant des disques à ressort (52.8) ou des éléments élastiques analogues qui agissent vers le bas sur un rouleau de pression (55), de même que des surfaces de butée rigides (52.9, 53.9) pour la limitation du mouvement vertical.

8. Véhicule selon la revendication 7, caractérisé en ce que les crochets de verrouillage (52.1, 52.2) à l'avant sont disposés sur les pieds, servant à la fixation (30.4, 30.5), des colonnes (30.2, 30.3) du portique.

9. Véhicule selon la revendication 7 ou 8, caractérisé en ce que les crochets de verrouillage (52) sont disposés sur des profilés longitudinaux (51), de forme tubulaire, qui portent les crochets.

Fig.1

50.2
32.61 50.1 31
12.1
35.5
35.4
35.2
43
30.6
42
13
30.8 38 52.2 39
32.2 40
12
32.1
30.7
32.3
30.1
30
30.2
30.3
32.51
35
36 41
25.2
25.4 25.3
25.1
21.8
21.7 24.5 23.2 23.4
24.4
10
20
22 21.1
21.6 21.5
24.6
23.5
30.4
30.5
52.1
16
15
52
53
51.1
21.3
21.4
21.2
11.1
11.2
11.2 51.3 51.2
14
11
0 025 557

Fig. 2

0 025 557

**Fig.3**

**Fig.4**

Fig.5